# EUROPEAN PATENT APPLICATION

(11) **EP 4 510 242 A1**
(43) Date of publication of application: **19.02.2025**
(21) Application number: 23825822.2
(22) Date of filing: 01.03.2023
(51) Int. Cl.: H01M 4/62, H01M 10/0525

(54) **POSITIVE ELECTRODE MATERIAL, SECONDARY BATTERY, BATTERY MODULE, BATTERY PACK AND ELECTRIC DEVICE**

(30) Priority: 22.06.2022 CN 202210711937
(71) Applicant: Contemporary Amperex Technology Co., Limited, Ningde, Fujian 352100 (CN)
(72) Inventor: LU, Lei, Ningde, Fujian 352100 (CN); HU, Changyuan, Ningde, Fujian 352100 (CN); WANG, Zheng, Ningde, Fujian 352100 (CN); WANG, Yalong, Ningde, Fujian 352100 (CN); LI, Shisong, Ningde, Fujian 352100 (CN); DAI, Shunhao, Ningde, Fujian 352100 (CN)
(74) Representative: Herrmann, Uwe
(86) International application number: PCT/CN2023/079033
(87) International publication number: WO 2023/246164

(57) **Abstract**

This application relates to a positive electrode material, and a secondary battery, battery module, battery pack, and electric apparatus including the same. The positive electrode material includes an active substance and a binder, and the binder has the following formula: 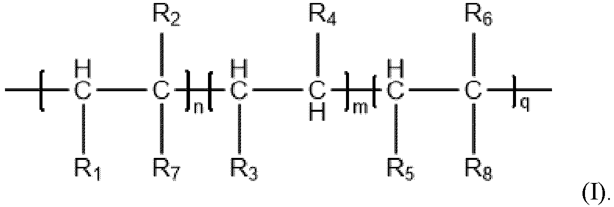 The fluorine-free binder in the positive electrode material not only has good flexibility and cohesiveness but also good NMP solubility and thus is a good substitute for PVDF.

## Description

This application claims priority to 202210711937.4, filed on June 22, 2022.

### TECHNICAL FIELD

This application relates to the field of battery materials, and in particular to, a positive electrode material, and a secondary battery, battery module, battery pack, and electric apparatus including the same.

### BACKGROUND

Developing a high-capacity, high-voltage positive electrode material is crucial for increasing the energy density of lithium-ion batteries. However, apart from the material itself, the main challenges faced by the positive electrode include issues such as uneven electronic and ionic conduction networks, insufficient adhesion, and dissolution, which are closely related to the positive electrode binder. One of the widely used binders in the existing lithium-ion batteries is polyvinylidene fluoride (PVDF), which is combined with N-methylpyrrolidone (NMP) to form an organic oily system. PVDF is widely used due to stable electrochemical window and strong adhesion performance; however, PVDF has the following drawbacks: (1) PVDF easily swells in an organic electrolyte, leading to reduced adhesion of an infiltrated electrode plate and a damaged conductive network. More severely, this may cause the electrode plate to delaminate, resulting in significant degration of the long-term cycling performance of the battery. (2) The element F introduced into PVDF easily forms HF within the battery, adversely affecting the battery by corroding the current collector and damaging the micro-nano structure of the electrode active material (for example, lithium iron phosphate or ternary materials). (3) PVDF is difficult to recycle during battery recycling. (4) PVDF is currently expensive, increasing the production costs of lithium-ion batteries. Based on the above drawbacks of PVDF, many technologies have been developed to replace PVDF with other binders, especially fluorine-free ones for the positive electrode.

However, the fluorine-free binders reported in recent years have issues such as insufficient flexibility and poor solubility in the NMP system, making it difficult to balance multiple performance aspects.

Therefore, the present invention is proposed.

### SUMMARY

The main objective of the present invention is to provide a positive electrode material and a secondary battery, battery module, battery pack, and electric apparatus including the same. A fluorine-free binder in the positive electrode material has good flexibility, cohesiveness, and NMP solubility, and thus is a good substitute for PVDF.

To achieve the above objective, the present invention provides the following technical solutions.

According to a first aspect, the present invention provides a positive electrode material, including an active substance and a binder, where the binder has the following formula: 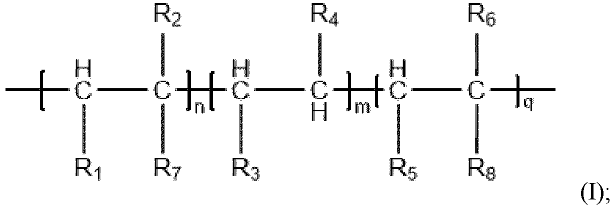 where,
R₁, R₃, R₇, and R₈ are each independently selected from H, halogen, substituted or unsubstituted C1-8 alkyl group, substituted or unsubstituted C1-8 alkoxy group, substituted or unsubstituted C1-8 acyloxy group, and substituted or unsubstituted C1-8 acylamino group;
R₂ is selected from -CN, -OH, -COOH and soluble salts thereof, sulfonic acid group and a salt thereof, substituted or unsubstituted C1-8 acyloxy group, substituted or unsubstituted C1-8 acylamino group, and substituted or unsubstituted C5-8 cycloacylamino group;
R₄ is selected from substituted or unsubstituted C5-20 aryl group, substituted or unsubstituted C4-8 saturated or unsaturated cyclic group, and substituted or unsubstituted C5-30 heterocyclic group;
R₅ and R₆ are each independently selected from -H, halogen, hydroxyl group, substituted or unsubstituted C1-8 alkyl group, substituted or unsubstituted C1-8 alkoxy group, and substituted or unsubstituted C1-8 alkene group; and
n=2100-4500, m=2100-5850, and q=350-1800.

The binder has three repeating units, and the three repeating units contribute different main characteristics to the binder, as follows.

The substituents R₁, R₂, and R₇ in the unit 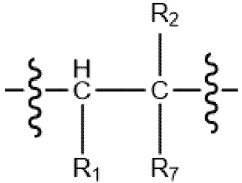 are mainly selected from highly lipophilic polar groups, such that the positive electrode binder has good solubility in an NMP solvent and thus is compatible with the current electrode plate process.

The substituent R₄ in the unit 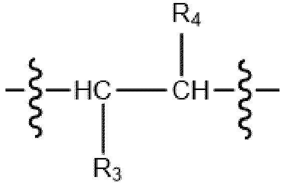 is mainly selected from aromatic or heterocyclic groups that can enhance rigidity, thereby providing strong intermolecular interactions and sufficient strength to the electrode plate.

The substituents R₅ and R₆ in the unit 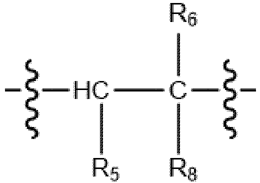 are mainly selected from alkyl group, alkoxy group, or alkenyl group that increases molecular flexibility, which can reduce the strong intermolecular interactions between binder molecules, enhance the conformational changes of the binder molecules, and improve the flexibility of the binder. This can improve the overall flexibility of the electrode plate and significantly reduce the probability of fracture during processing and use of the prepared thick electrode plate, thereby improving the processing yield and use safety of the lithium-ion battery, overcoming the issue of powder falling off the positive electrode during charge and discharge, and prolonging the service life of the lithium-ion battery.

Thus, the molecular structure of the above binder determines that it has good flexibility, rigidity, and lipophilicity. Therefore, when used in the positive electrode, the binder is more suitable for thick film production and less prone to fracture, has good strength and good solubility in the NMP system, and is not easy to swell, and thus can be a good substitute for PVDF.

In some embodiments, substituents of groups in the binder are each independently selected from C1-8 alkyl group, halogen, -OH, C3-8 cycloalkyl group, C2-8 heterocycloalkyl group, C1-8 carboxyl group and a salt thereof, and sulfonic acid group and a salt thereof.

In some embodiments, a substituent of R₄ in the binder is selected from - OH, C1-4 carboxyl group and a salt thereof, and sulfonic acid group and a salt thereof.

In some embodiments, in the binder, R₁, R₃, R₇, and R₈ are each independently selected from H, Cl, substituted or unsubstituted C1-4 alkyl group, substituted or unsubstituted C1-4 alkoxy group, substituted or unsubstituted C1-4 acyloxy group, and substituted or unsubstituted C1-4 acylamino group;
and/or
R₂ is selected from -CN, -OH, -COOH and soluble salts thereof, sulfonic acid group and a salt thereof, substituted or unsubstituted C1-4 acyloxy group, substituted or unsubstituted C1-4 acylamino group, and substituted or unsubstituted C5-8 cycloacylamino group;
   and/or
R₄ is selected from substituted or unsubstituted C6-18 aryl group, substituted or unsubstituted C4-8 saturated or unsaturated cyclic group, and substituted or unsubstituted C6-18 heterocyclic group;
   and/or
R₅ and R₆ are each independently selected from -H, halogen, hydroxyl group, substituted or unsubstituted C1-4 alkyl group, substituted or unsubstituted C1-4 alkoxy group, and substituted or unsubstituted C1-4 alkene group.

In some embodiments, R₄ is selected from phenyl group, cyclohexenyl group, six-membered cyclic alkane group, six-membered cyclic ketone group, and six-membered cyclic alcohol group.

In some embodiments, R₄ is selected from styrene, limonene, and sodium styrene sulfonate.

In some embodiments, C1-8 alkyl group includes but is not limited to -CH₃, -CH₂CH₃, -CH(CH₃)₂, -(CH₂)₂CH₃, -(CH₂)₃CH₃, -CH₂CH(CH₃)₂, - CH(CH₃)CH₂CH₃, -CH₂CH(CH₃)₂, -C(CH₃)₃, -(CH₂)₄CH₃, -CH₂CH₂CH(CH₃)₂, - CH(CH₃)CH₂CH₂CH₃, -CH₂CH(CH₃)CH₂CH₃, -CH₂C(CH₃)₃, and -(CH₂)₅CH₃.

In some embodiments, the C1-8 alkoxy group includes but is not limited to -OCH₃, -OCH₂CH₃, -OCH(CH₃)₂, -O(CH₂)₂CH₃, -(CH₂)₃CH₃, -OCH₂CH(CH₃)₂, - OCH(CH₃)CH₂CH₃, -OCH₂CH(CH₃)₂, -OC(CH₃)₃, -O(CH₂)₄CH₃, - OCH₂CH₂CH(CH₃)₂, -OCH(CH₃)CH₂CH₂CH₃, -OCH₂CH(CH₃)CH₂CH₃, - OCH₂C(CH₃)₃, and -O(CH₂)₅CH₃.

In some embodiments, the C1-8 alkene group includes but is not limited to -CH=CH=, -CH₂CH=CH₂, -CH₂CH=CHCH₃, -CH=CH=CHCH₂CH₃, - CH₂CH=CHCH(CH=)₂, -(CH2)₂CH=CH=, -(CH₂)₂CH=CHCH₃, - (CH₂)₂CH=CHCH₂CH₃, and -(CH₂)₂CH=CHCH(CH₃)₂.

In some embodiments, the C1-8 acyloxy group includes but is not limited to -COOCH₃, -COOCH₂CH₃, -COO(CH₂)₂CH₃, -COOCH(CH₃)₂, -COO(CH₂)₃CH₃, -COOCH₂CH(CH₃)₂, -COOCH(CH₃)CH₂CH₃, -COOCH₂CH(CH₃)₂, -COOC(CH₃)₃, - COO(CH₂)₄CH₃, -COOCH₂CH₂CH(CH₃)₂, -COOCH(CH₃)CH₂CH₂CH₃, - COOCH₂CH(CH₃)CH₂CH₃, -COOCH₂C(CH₃)₃, -COO(CH₂)₅CH₃, and - COO(CH₂)₆CH₃.

In some embodiments, the C1-8 acylamino group includes but is not limited to -CONCH₃, -CONCH₂CH₃, -CON(CH₂)₂CH₃, -CONCH(CH₃)₂, -CON(CH₂)₃CH₃, -CONCH₂CH(CH₃)₂, -CONCH(CH₃)CH₂CH₃, -CONCH₂CH(CH₃)₂, -CONC(CH₃)₃, -CON(CH₂)₄CH₃, -CONCH₂CH₂CH(CH₃)₂, -CONCH(CH₃)CH₂CH₂CH₃, - CONCH₂CH(CH₃)CH₂CH₃, -CONCH₂C(CH₃)₃, -CON(CH₂)₅CH₃, and - CON(CH₂)₆CH₃.

In some embodiments, in the binder, R₂ is selected from -CN, -COOH and a soluble salt thereof, acid group and a salt thereof, substituted or unsubstituted C1-8 acyloxy group, and 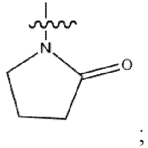 and/or
R₄ is selected from phenyl group, methylphenyl group, benzylidene group, cyclohexenyl group, six-membered cyclic alkane group, six-membered cyclic ketone group, six-membered cyclic alcohol group, and benzenesulfonate group;
   and/or
R₅ and R₆ are each independently selected from -H, -Cl, methyl group, vinyl group, and hydroxyl group.

In some embodiments, in the binder, R₁, R₃, R₅, R₇, and R₈ are all hydrogen, R₂ is -CN, R₄ is phenyl group, and R₆ is vinyl group. The binder has the following molecular structure:

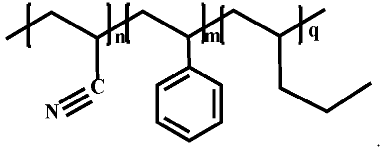

In some embodiments, through calculation based on weight, a percentage of the binder is 0.8-5wt%, preferably 1.0-2.5wt%. It has been found through experiments that the final quality of the positive electrode plate is closely related to the addition amount of the binder. If the addition amount of the binder is too low, the insufficient binder cannot support the strength of the positive electrode film, thus failing to meet the requirements of calendering and thinning. If the addition amount of the binder is too high, the following two technical issues are caused. (1) The film layer has a large viscosity and is likely to stick to the roller during rolling, and thus cannot be thinned and composite with the current collector. (2) Since the binder itself does not have lithium ions (Li⁺) and electrons (e⁻), excessive binder remaining in the electrode plate hinders the transmission of lithium ions and electrons, especially causing an increase in interfacial charge transfer resistance (Rct), thus leading to an increase in the direct current internal resistance of the battery, and deterioration in the rate performance and cycling performance. Controlling the addition amount of the binder within the above range not only meets the requirements for good electrode plate preparation but also ensures a proper percentage of the binder in the electrode plate and a high percentage of the active substance in the positive electrode. The positive electrode plate has good lithium-ion conductivity and electronic conductivity, and thus using the positive electrode plate in the lithium battery can significantly increase the energy density, rate performance, and cycling performance of the battery.

In some embodiments, through calculation based on weight, a percentage of the active substance is 85-98.7wt%, preferably 91.5-98.3wt%;
and/or
the positive electrode material further includes a conductive agent, and a percentage of the conductive agent is 0.5-10wt%, preferably 0.7-6wt%.

In some embodiments, the active substance includes at least one of the following: olivine-structured lithium-containing phosphate, lithium transition metal oxide, and respective modified compounds thereof. However, this application is not limited to such materials, and may alternatively use other conventional well-known materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the conductive agent includes at least one of the following: conducting carbon, acetylene black, carbon black, Ketjen black, carbon dots, carbon nanotubes, graphene, and carbon nanofiber.

In some embodiments, the solvent used for the positive electrode slurry is NMP, with a solid content reaching 75%-90%. When the solid content of the positive electrode is ≥75%, the slurry loses its leveling property and can be calendered into a film through a roller press; increasing the solid content can effectively reduce drying energy consumption and production costs.

The positive electrode slurry includes an active substance, a conductive agent, a binder, and the like. These components are dissolved in the above solvent, then applied to at least one surface of the current collector, and dried to obtain a positive electrode plate.

The binder in the positive electrode of any solution described above in the present invention can be obtained by the following preparation method, mainly including:

First, the following three monomers I-1, I-2, and I-3 are polymerized and purified to obtain the binder; 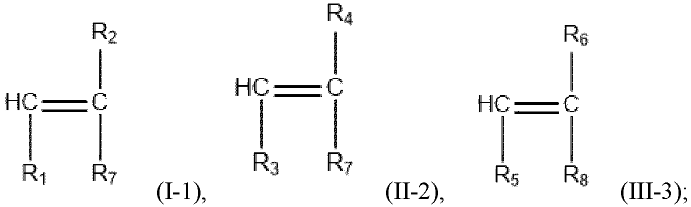 where R₁, R₂, R₃, R₄, R₅, R₆, R₇, and R₈ are defined as above.

Then, the binder, the active substance, and other optional auxiliary materials are mixed to obtain a positive electrode material.

The polymerization reaction of the above monomers I-1, I-2, and I-3 is an addition polymerization reaction, which may be a free radical polymerization type. The usable free radical initiators include benzophenone, benzoyl peroxide, ammonium persulfate, and the like.

Corresponding to the performance of the binder, the monomer I-1 is a polar monomer, the monomer I-2 is a rigid monomer, and the monomer I-3 is a flexible monomer.

In the ranges specified above for R₁, R₂, R₃, R₄, R₅, R₆, R₇, and R₈, the polar monomer I-1 is preferably of the following types: 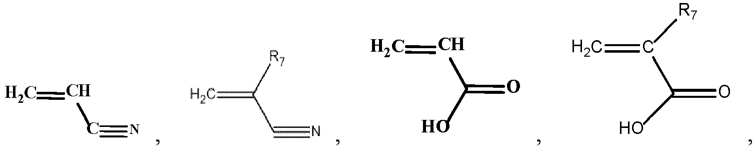 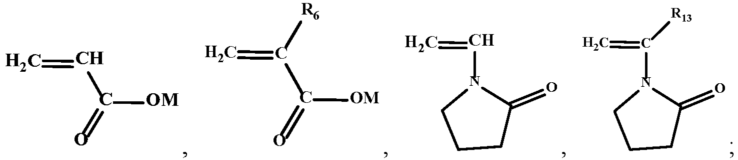 where R₁₃ is selected from H, halogen, substituted or unsubstituted C1-8 alkyl group, substituted or unsubstituted C1-8 alkoxy group, substituted or unsubstituted C1-8 acyloxy group, and substituted or unsubstituted C1-8 acylamino group.

The preferred types of the rigid monomer I-2 are: 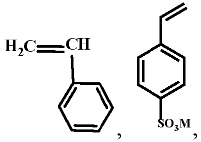 or other alkenes containing rigid groups such as phenyl group, cyclohexenyl group, six-membered cyclic alkane group, six-membered cyclic ketone group, and six-membered cyclic alcohol group.

The preferred types of the flexible monomer I-3 are:

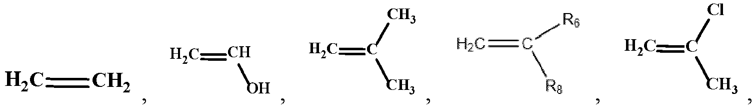

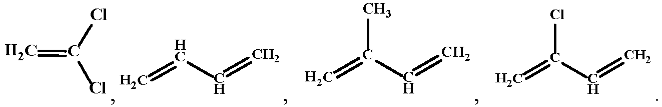

During polymerization, the proper initiator, solvent, and polymerization temperature can be selected based on the performance of the monomers.

Taking 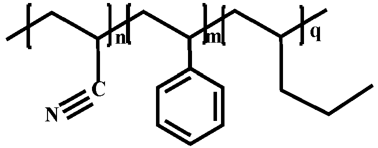 as an example, the following conditions can be used preferably:
Benzoyl peroxide is used as the initiator, and acrylonitrile, styrene, and butadiene are mixed to react at 70-80°C.

In some embodiments, the molar ratio of acrylonitrile, styrene, and butadiene is 30-50:30-65:5-20.

In some embodiments, polyvinyl alcohol is also added during reaction, and the molecular weight of the polyvinyl alcohol is preferably 1500-2000.

### Terms

As described in the present invention, the compounds of the present invention may optionally be substituted with one or more substituents, as in the general formula compound above, or as in specific examples, subclasses, and classes of compounds included in the present invention. It should be understood that the term "optionally substituted" can be used interchangeably with "substituted or unsubstituted." Generally, the term "substituted" means that one or more hydrogen atoms in a given structure are replaced by specific substituents. Unless otherwise indicated, an optional substituent group can perform substitution at any position available on the group. When one or more substituents selected from a specific group can perform substitution at multiple positions in a given structure formula, the substituents can perform substitution at the same or different positions. The substituents described may include, but are not limited to, deuterium, fluorine, chlorine, bromine, iodine, cyano group, hydroxyl group, nitro group, amino group, carboxy group, alkyl group, alkoxy group, alkoxyalkyl group, alkoxyalkoxy group, alkoxyamino group, aryloxy group, heteroaryloxy group, heterocyclooxy group, arylalkoxy group, heteroarylalkoxy group, heterocycloalkoxy group, cycloalkylalkoxy group, alkylamino group, alkylaminoalkyl group, alkylaminoalkylamino group, cycloalkylamino group, cycloalkylalkylamino group, alkylthio group, haloalkyl group, haloalkoxy group, hydroxyl-substituted alkyl group, hydroxyl-substituted alkylamino group, cyano-substituted alkyl group, cyano-substituted alkoxy group, cyano-substituted alkylamino group, amino-substituted alkyl group, alkylcarbonyl group, heteroalkyl group, cycloalkyl group, cycloalkenyl group, cycloalkylalkyl group, heterocyclo group, heterocycloalkyl group, heterocyclocarbonyl group, aryl group, arylalkyl group, arylamino group, heteroaryl group, heteroarylalkyl group, heteroarylamino group, amido group, sulfonyl group, and aminosulfonyl group.

Additionally, it should be noted that unless otherwise explicitly stated, the descriptive phrases "each ... independently" and "... each independently" and "... independently" used in the present invention can be used interchangeably and should be broadly understood. This can mean that in different groups, the specific options expressed by the same symbol do not affect each other, or that within the same group, the specific options expressed by the same symbol do not affect each other.

In various parts of this specification, the substituents of the disclosed compounds are disclosed based on the types or ranges of groups. It is particularly noted that the present invention includes each independent sub-combination of the members of these types and ranges of groups. For example, the term "C₁-C₆ alkyl group" or "C₁₋₆ alkyl group" particularly refers to independently disclosed methyl group, ethyl group, C₃ alkyl group, C₄ alkyl group, C₅ alkyl group, and C₆ alkyl group.

The term "alkyl" or "alkyl group" used in the present invention refers to a saturated, straight-chain or branched monovalent hydrocarbon group containing 1 to 20 carbon atoms; where the alkyl group is optionally substituted with one or more substituents described in this invention. Unless otherwise specified, the alkyl group includes 1-20 carbon atoms. In an implementation, the alkyl group includes 1-12 carbon atoms; in an implementation, the alkyl group includes 1-10 carbon atoms; in an implementation, the alkyl group includes 1-8 carbon atoms; in another implementation, the alkyl group includes 1-6 carbon atoms; in still another implementation, the alkyl group includes 1-4 carbon atoms; and in yet still another implementation, the alkyl group includes 1-3 carbon atoms.

Examples of the alkyl group include, but are not limited to, methyl (Me, - CH₃), ethyl (Et, -CH₂CH₃), n-propyl (n-Pr, -CH₂CH₂CH₃), isopropyl (i-Pr, - CH(CH₃)₂), n-butyl (n-Bu, -CH₂CH₂CH₂CH₃), isobutyl (i-Bu, -CH₂CH(CH₃)₂), sec-butyl (s-Bu, -CH(CH₃)CH₂CH₃), tert-butyl (t-Bu, -C(CH₃)₃), n-pentyl (-CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl (-CH₂CH(CH₃)CH₂CH₃), n-hexyl (-CH₂CH₂CH₂CH₂CH₂CH₃), 2-hexyl (-CH(CH₃)CH₂CH₂CH₂CH₃), 3-hexyl (-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), 3,3-dimethyl-2-butyl (-CH(CH₃)C(CH₃)₃), n-heptyl, and n-octyl.

The term "alkenyl group" refers to a straight-chain or branched monovalent hydrocarbon group containing 2-12 carbon atoms, with at least one unsaturated site, that is, a carbon-carbon sp² double bond, where the alkenyl group may optionally be substituted with one or more substituents described in the present invention, including "cis" and "trans" positions, or "E" and "Z" positions. In an implementation, the alkenyl group includes 2-10 carbon atoms; in another implementation, the alkenyl group includes 2-8 carbon atoms; in another implementation, the alkenyl group includes 2-6 carbon atoms; and in yet another implementation, the alkenyl group includes 2-4 carbon atoms. Examples of the alkenyl group include, but are not limited to, vinyl group (-CH=CH₂), allyl group (-CH₂CH=CH₂), propenyl group (CH₃-CH=CH-), - CH₂CH₂CH=CH₂, -CH₂CH=CHCH₃, -CH₂CH₂CH₂CH=CH₂=CH₂, - CH₂CH₂CH=CHCH₃, and -CH₂CH₂CH₂CH=CHCH₃.

The term "alkynyl group" refers to a straight-chain or branched monovalent hydrocarbon group containing 2-12 carbon atoms, with at least one carbon-carbon sp triple bond, where the alkynyl group may optionally be substituted with one or more substituents described in the present invention. In an implementation, the alkynyl group includes 2-10 carbon atoms; in another implementation, the alkynyl group includes 2-8 carbon atoms; in another implementation, the alkynyl group includes 2-6 carbon atoms; and in yet another implementation, the alkynyl group includes 2-4 carbon atoms. Examples of the alkynyl group include, but are not limited to, -C=CH, -C≡CCH₃, - CH₂-C≡CH, -CH₂-C≡CCH₃, -CH₂CH₂-C≡CH, and -CH₂-C≡CCH₂CH₃, - CH₂CH₂-C≡CCH₃.

The term "alkoxy group" refers to an alkyl group connected to the rest of the molecule through an oxygen atom, where the alkyl group has the meaning as described in the present invention Unless otherwise specified, the alkoxy group includes 1-12 carbon atoms. In an implementation, the alkoxy group includes 1-10 carbon atoms; in an implementation, the alkoxy group includes 1-8 carbon atoms; in an implementation, the alkoxy group includes 1-6 carbon atoms; in another implementation, the alkoxy group includes 1-4 carbon atoms; and in still another implementation, the alkoxy group includes 1-3 carbon atoms. The alkoxy group may optionally be substituted with one or more substituents described in the present invention.

Examples of the alkoxy group include, but are not limited to, methoxy (MeO, -OCH₃), ethoxy (EtO, -OCH₂CH₃), 1-propoxy (n-PrO, n-propoxy, -OCH₂CH₂CH₃), 2-propoxy (i-PrO, i-propoxy, -OCH(CH₃)₂), 1-butoxy (n-BuO, n-butoxy, - OCH₂CH₂CH₂CH₃), 2-methyl-1-propoxy (i-BuO, i-butoxy, -OCH₂CH(CH₃)₂), 2-butoxy (s-BuO, s-butoxy, -OCH(CH₃)CH₂CH₃), 2-methyl-2-propoxy (t-BuO, t-butoxy, -OC(CH₃)₃), 1-pentoxy (n-pentoxy, -OCH₂CH₂CH₂CH₂CH₃), 2-pentoxy (-OCH(CH₃)CH₂CH₂CH₃), 3-pentoxy (-OCH(CH₂CH₃)₂), 2-methyl-2-butoxy (-OC(CH₃)₂CH₂CH₃), 3-methyl-2-butoxy (-OCH(CH₃)CH(CH₃)₂), 3-methyl-1-butoxy (-OCH₂CH₂CH(CH₃)₂), and 2-methyl-1-butoxy (-OCH₂CH(CH₃)CH₂CH₃).

The term "halogen" refers to fluorine (F), chlorine (Cl), bromine (Br), or iodine (I).

The term "haloalkyl group" refers to an alkyl group substituted with one or more halogen atoms. Examples of the haloalkyl group include, but are not limited to - CH₂F, -CHF₂, -CH₂Cl, -CH₂Br, -CF₃, -CH₂CF₃, -CH₂CH₂F, -CH₂CH₂Cl, - CH₂CH₂Br, -CH₂CHF₂, -CH₂CH₂CF₃, -CH₂CH₂CH₂F, -CH₂CH₂CH₂Cl, - CH₂CH₂CH₂Br, -CHFCH₂CH₃, and -CHClCH₂CH₃.

The term "haloalkoxy group" refers to an alkoxy group substituted with one or more halogen atoms. Examples of the haloalkoxy group include, but are not limited to -OCH₂F, -OCHF₂, -OCH₂Cl, -OCH₂Br, -OCF₃, -OCH₂CF₃, -OCH₂CH₂F, - OCH₂CH₂Cl, -OCH₂CH₂Br, -OCH₂CHF₂, -OCH₂CH₂CF₃, -OCH₂CH₂CH₂F, - OCH₂CH₂CH₂Cl, -OCH₂CH₂CH₂Br, -OCHFCH₂CH₃, and -OCHClCH₂CH₃.

The term "haloalkenyl group" refers to an alkenyl group substituted with one or more halogen atoms.

The term "haloalkynyl group" refers to an alkynyl group substituted with one or more halogen atoms.

The term "cycloalkyl group" refers to a monovalent or polyvalent saturated monocyclic, bicyclic, or tricyclic system containing 3-12 carbon atoms. In an implementation, the cycloalkyl group includes 3-12 carbon atoms; in another implementation, the cycloalkyl group includes 3-10 carbon atoms; in another implementation, the cycloalkyl group includes 3-8 carbon atoms; and in yet another implementation, the cycloalkyl group includes 3-6 carbon atoms. The cycloalkyl group is optionally substituted with one or more substituents described in the present invention. Such examples include, but are not limited to, cyclopropyl, cyclobutyl, cyclopentyl, cyclohexyl, cycloheptyl, cyclooctyl, cyclononyl, cyclodecyl, cycloundecyl, cyclododecyl, and adamantyl.

As used in the present invention, the term "unsaturated" means that the group contains one or more degrees of unsaturation.

The term "heteroatom" refers to O, S, N, P, and Si, including any oxidation state forms of N, S, and P; primary, secondary, tertiary amines, and quaternary ammonium salts; or forms where hydrogen on a nitrogen atom in a heterocycle is replaced, for example, N (as in 3,4-dihydro-2H-pyrrolyl), NH (as in pyrrolidinyl), or NR (as in N-substituted pyrrolidinyl).

The term "aryl group" refers to a monocyclic, bicyclic, or tricyclic carbon ring system containing 6-14 ring atoms, or 6-12 ring atoms, or 6-10 ring atoms, where at least one ring system is aromatic, each ring system contains a ring composed of 3-7 atoms, and has one or more attachment points to the rest of the molecule. The term "aryl group" can be used interchangeably with the term "aromatic ring.". Examples of the aryl group may include phenyl group, indenyl group, naphthyl group, and anthryl group. The aryl group is optionally substituted with one or more substituents described in the present invention.

The term "acyloxy group" refers to an alkane group containing -COO-, with a total number of carbon atoms being 1-14, or 1-8, 1-4, or the like.

The term "acylamino group" refers to an alkane group containing -C(=O)-N-, with a total number of carbon atoms being 1-14, or 1-8, 1-4, or the like.

The term "acylamino group" refers to a cyclic alkane group containing - C(=O)-N-, with a total number of carbon atoms being 5-8.

When the compound of the present invention includes an acid moiety, the salts of the compound include those derived from alkali metals or alkaline earth metals, and those derived from ammonia and amines. Preferred cations include sodium, potassium, magnesium, and ammonium cations having the chemical formula N⁺(R¹⁹R²⁰R²¹R²²), where R¹⁹, R²⁰, R²¹, and R²² are independently selected from hydrogen, C₁-C₆ alkyl, and C₁-C₆ hydroxyalkyl. The salts of the compounds having formula (I), (Ia), or (Ib) can be prepared by treating the compounds having formula (I), (Ia), or (Ib) with a metal hydroxide (for example, sodium hydroxide) or amines (for example, ammonia, trimethylamine, diethanolamine, 2-methylthioethylamine, diallylamine, 2-butoxyethylamine, morpholine, dicyclohexylamine, or benzylamine).

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this application. In addition, in all the accompanying drawings, the same reference signs represent the same components. In the accompanying drawings:
FIG. 1 shows a clear state of a binder in Example 1 after dissolving in NMP.
FIG. 2 shows appearance of a positive electrode material obtained in Example 1 before rolling.
FIG. 3 shows the appearance of the positive electrode material in Example 1 after rolling.
FIG. 4 shows appearance of a positive electrode plate obtained in Example 1.
FIG. 5 is a schematic diagram of a secondary battery according to an embodiment of this application.
FIG. 6 is an exploded view of the secondary battery according to the embodiment of this application in FIG. 5.
FIG. 7 is a schematic diagram of a battery module according to an embodiment of this application.
FIG. 8 is a schematic diagram of a battery pack according to an embodiment of this application.
FIG. 9 is an exploded view of the battery pack according to the embodiment of this application in FIG. 8.
FIG. 10 is a schematic diagram of an electric apparatus using a secondary battery as a power source according to an embodiment of this application.

### DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the terms "first", "second", and the like are merely intended to distinguish between different objects, and shall not be understood as any indication or implication of relative importance or any implicit indication of the number, sequence or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated obj ects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skills in the art can understand specific meanings of these terms in this application as appropriate to specific situations.

As described in the summary of the present invention, the positive electrode material provided by the present invention exhibits good electrical performance due to the good flexibility, rigidity, and lipophilicity of the binder, such as unlikely breakage and improved capacity and cycling performance.

The following describes the use of the positive electrode material in this application in a secondary battery, a battery module, a battery pack, and an electric apparatus with appropriate reference to the accompanying drawings.

An embodiment of this application provides a secondary battery.

Typically, the secondary battery includes a positive electrode plate, a negative electrode plate, an electrolyte, and a separator. In a charge and discharge process of the battery, active ions intercalate and deintercalate between the positive electrode plate and the negative electrode plate. The electrolyte conducts ions between the positive electrode plate and the negative electrode plate. The separator is disposed between the positive electrode plate and the negative electrode plate to mainly prevent a short circuit between the positive and negative electrodes and to allow ions to pass through.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may use a metal foil current collector or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, under the condition that the secondary battery is a lithium-ion battery, the positive electrode active material may be a well-known positive electrode active material used for lithium-ion batteries in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCM₈₁₁ for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, under the condition that the secondary battery is a sodium-ion battery, the positive electrode active material may be a well-known positive electrode active material used for sodium-ion batteries in the art. In an example, one of these positive electrode active materials may be used alone, or two or more of them may be used in combination. The positive electrode active substance may be selected from sodium-iron complex oxide (NaFeO₂), sodium-cobalt complex oxide (NaCoO₂), sodium-chromium complex oxide (NaCrO₂), sodium-manganese complex oxide (NaMnO₂), sodium-nickel complex oxide (NaNiO₂), sodium-nickel-titanium complex oxide (NaNi_{1/2}Ti_{1/2}O₂), sodium-nickel-manganese complex oxide (NaNi_{1/2}Mn_{1/2}O₂), sodium-iron-manganese complex oxide (Na_{2/3}Fe_{1/3}Mn_{2/3}O₂), sodium-nickel-cobalt-manganese complex oxide (NaNi_{1/3}Co_{1/3}Mn_{1/3}O₂), sodium-iron phosphate compound (NaFePO₄), sodium-manganese phosphate compound (NaMn_{P}O₄), sodium-cobalt phosphoric acid compound (NaCoPO₄), a Prussian blue material, a polyanionic material (phosphate, fluorophosphate, pyrophosphate, sulfate), and the like. However, this application is not limited to these materials, and this application may use other conventionally known materials that can be used as positive electrode active substances for sodium-ion batteries.

In some embodiments, the positive electrode film layer also optionally includes a binder, which can be the fluorine-free binder provided by the present invention.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

A negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material for batteries well-known in the art. In an example, the negative electrode active material may include at least one of the following materials: artificial graphite, natural graphite, soft carbon, hard carbon, silicon-based materials, tin-based materials, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compounds, or tin alloys. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer may further optionally include another promoter such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

An electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid. The electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

### [Separator]

In some embodiments, the secondary battery further includes a separator. This application poses no specific limitation on a type of the separator, and any well-known porous separator with good chemical stability and mechanical stability can be selected.

In some embodiments, a material of the separator may be at least one selected from glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of the same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

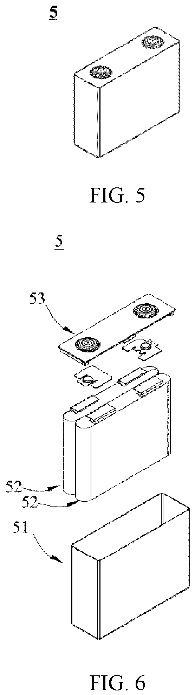

This application poses no specific limitation on a shape of the secondary battery, and the secondary battery may be cylindrical, rectangular, or of any other shape. For example, FIG. 5 shows a secondary battery 5 of a square structure as an example.

In some embodiments, referring to FIG. 6, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. A positive electrode plate, a negative electrode plate, and a separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

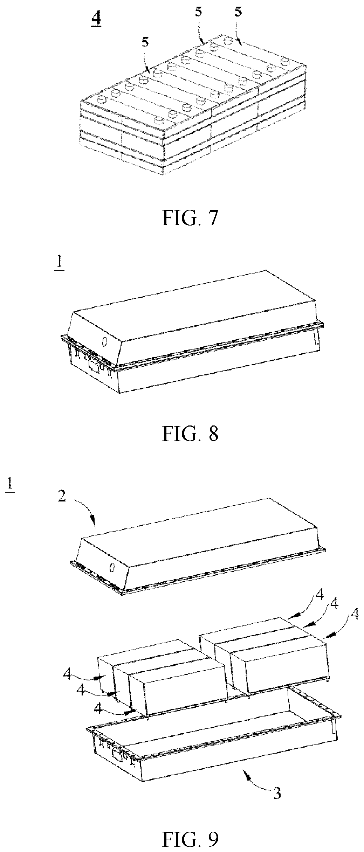

FIG. 7 shows a battery module 4 as an example. Referring to FIG. 7, in the battery module 4, a plurality of secondary batteries 5 may be sequentially arranged in a length direction of the battery module 4. Certainly, the secondary batteries may alternatively be arranged in any other manners. Further, the plurality of secondary batteries 5 may be fastened by using fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art based on use and capacity of the battery pack.

FIGs. 8 and 9 show a battery pack 1 as an example. Referring to FIGs. 8 and 9, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like, but is not limited thereto.

The secondary battery, the battery module, or the battery pack may be selected for the electric apparatus based on requirements for using the electric apparatus.

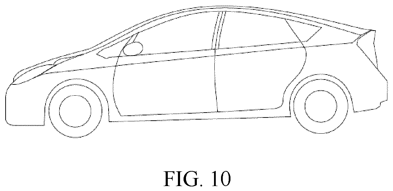

FIG. 10 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. The apparatus is usually required to be light and thin, and the secondary battery may be used as a power source.

### Example

The following describes examples of this application. The examples described below are illustrative and only used to explain this application, and cannot be construed as limitations on this application. Examples whose technologies or conditions are not specified are made in accordance with technologies or conditions described in literature in the field, or made in accordance with product instructions. The reagents or instruments used are all conventional products that are commercially available if no manufacturer is indicated.

### Example 1

### Positive electrode material

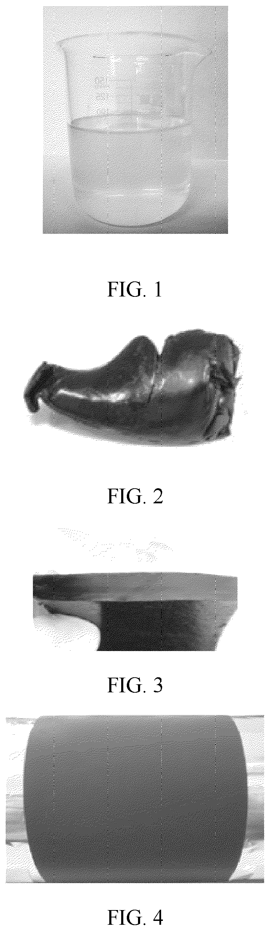

A positive electrode active material, a conductive agent, a binder, and the like were prepared into a slurry of a high solid content (75%) using a kneader, with NMP as the solvent. 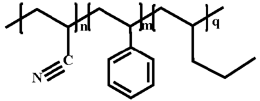 was used as the binder, showing good solubility (as shown in FIG. 1, the NMP solution of the binder), lithium iron phosphate was used as the positive electrode active material, and carbon black was used as the conductive agent. The percentage of the binder in the solid phase was 0.8wt%, the percentage of the conductive agent was 0.7wt%, and the remainder was the positive electrode active material accounted for the remainder of the solid phase, where n=2100-4500, m=2100-5850, and q=350-1800.

The prepared slurry with a high solid content was directly extruded to obtain a thick film with uniform thickness (the appearance before extrusion is shown in FIG. 2, and the film after extrusion is shown in FIG. 3).

The prepared thick positive electrode film was rolled and thinned to obtain a flexible film, which was then compositely adhered to a current collector to obtain a positive electrode plate, as shown in FIG. 4. The flexible film did not stick to the roller surface and could be easily peeled off. The positive electrode plate, after compositely adhered to the current collector, was put into an oven for drying, further cold-calendered, and slit to obtain a positive electrode plate.

### Example 2 to Example 8

These examples and Example 1 differ only in the type of the binder. Specifically, 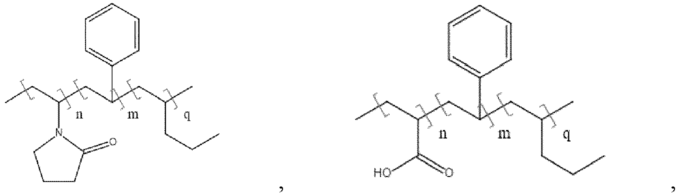 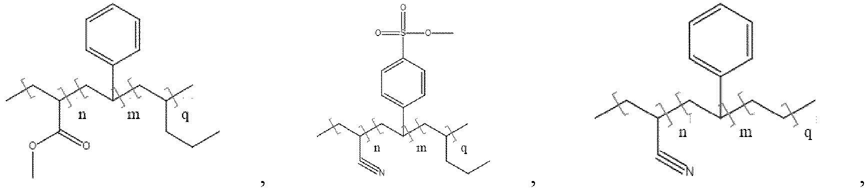 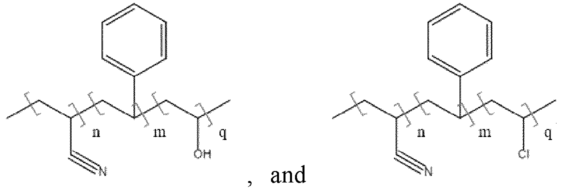 were respectively used as binders, all showing good solubility in NMP.

### Example 9 to Example 13

These examples were only different from Example 1 in the percentage of the binder, and had 0.5wt%, 1wt%, 2.5wt%, 5wt%, and 7wt%, respectively.

### Comparative example:

This example was only different from Example 1 in the binder being replaced with

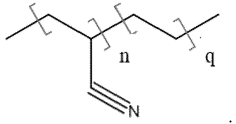

**The performance of the above positive electrode material sheets in the batteries was tested, and the test results are shown in Table 1.**

### Test methods:

The positive electrode plate, the separator, and the negative electrode plate prepared in the corresponding embodiments and comparative examples were stacked in sequence, such that the separator was sandwiched between the positive electrode plate and negative electrode plate to provide separation. Then the resulting stack was wound to obtain a jelly roll. The jelly roll was welded with a tab and packaged into an aluminum shell, followed by baking for water removal at 80°C, injection with the electrolyte, and sealing, to obtain a non-charged battery. The non-charged battery was subjected to processes such as standing, thermal compressing, formation, shaping, and capacity testing, to obtain a lithium-ion battery product. The separators and the negative electrode plates used in the samples were the same, and a polypropylene film was used as the separator.

### Preparation of negative electrode plate:

A negative electrode active material graphite, a conductive agent carbon black, a binder styrene-butadiene rubber (SBR), and a thickener sodium carboxymethyl cellulose (CMC-Na) were dissolved at a weight ratio of 96.8:0.7: 1.5: 1 in a solvent deionized water and were mixed to uniformity to obtain a negative electrode slurry. The negative electrode slurry was evenly applied onto a Cu foil, followed by drying, cold pressing, and slitting, to obtain a negative electrode plate.

### Characterization tests

The blanks or finished batteries prepared in the preceding examples and comparative examples were subjected to the following characterization tests.

### (1) Test for binder dissolution time

200 g of NMP and 5g of binder were subsequently added to a 500 ml beaker and then stirred at 800 rpm using a stirrer. The time from the start of dissolution to complete dissolution of the binder was recorded. The criterion for determining the complete dissolution of the binder was: the viscosity of the solution was measured every 10 min using a rotary viscometer, turning out that the viscosity did not change.

### (2) Test for slurry viscosity

The dynamic viscosity of the slurry was measured using an Anton Paar rotational rheometer at a shear rate of 0.1 s⁻¹ to 100 s⁻¹ for 31 points, and a consistency coefficient was obtained after 31 viscosity results were fitted, where the consistency coefficient could characterize the viscosity of the slurry.

### (3) Test for mechanical strength of thick positive electrode film

The thick blank was cut into long strips of 15 mm×150 mm (width×length). An INSTRON-5965 tensile machine was used for a tensile test. The distance between the fixtures was 80mm, and the tensile speed was 10 mm/min. After the test was completed, the load and fixture displacement data in the tensile process could be obtained, and the tensile strength and deformation value in the tensile process could be obtained by calculation, where tensile strength=load value/(strip width×strip thickness), and deformation=displacement value/distance between fixtures. A tensile curve could be obtained by plotting the tensile strength against the deformation. The highest point of the curve means that the strip breaks, and the tensile strength corresponding to the highest point is the mechanical strength of the thick blank.

### (4) Test for flexibility of positive electrode plate

Winding mandrels of different diameters were taken and sorted in order. The diameter difference between the winding mandrels was 1 mm. The positive electrode plates prepared in the examples and comparative examples were attached to the winding mandrels of different diameters. Whether there were cracks was observed until one of the positive electrode plates on two adjacent winding mandrels had no cracks and the other had cracks, and the diameter of the winding mandrel with the positive electrode plate free of cracks was recorded as an index for evaluating the flexibility of the positive electrode plate.

Note: A smaller diameter recorded of the winding mandrel indicates better flexibility.

### (5) Test for peeling force of positive electrode plate

The electrode plate was cut into long strips of 400 mm×30 mm (length×width) with a customized knife die. A flat thin steel plate of about 200 mm to 300 mm in length and 40 mm to 60 mm in width was taken, a strip of double-sided tape (with a length greater than the sample test length and a width of 20 mm) was put in the center of the steel plate, and smoothed with force to ensure that the double-sided tape was closely attached to the center of the steel plate. The protective layer of the double-sided tape was removed and the electrode plate was attached to the tape. The steel plate fixedly pasted with the electrode plate was inserted into a lower fixture of a tensile machine and fixed vertically. The electrode plate with no tape was inserted into an upper fixture and fixed such that the electrode plate attached to the tape had an angle of 180° with respect to the electrode plate fixed in the upper fixture. After the test sample was fixed, calibration was reset, the test width was set, the electrode plate peeling length was 50 mm, the peeling speed was 100 mm/min, and then the test was started. After the test was completed, the load and fixture displacement data in the peeling process could be obtained, and the peeling force could be obtained through calculation: peeling force=load/double-sided tape width. A peeling force curve could be obtained by plotting the peeling force against the displacement. The peeling force corresponding to the stable part of the curve is the peeling force of the electrode plate.

### (6) Battery capacity retention rate test

Battery capacity retention rate test process was as follows: at 25°C, the batteries prepared in the examples and comparative examples were constant-current charged at 1/3C to 3.6 V, then constant-voltage charged to a current of 0.05C, left standing for 5 min, and then discharged at 1/3C to 2.5 V The resulting capacities were recorded as the initial capacities C0. The preceding steps were repeated for the same battery and the discharged capacity Cn after the n-th cycle was recorded, and the battery capacity retention rate Pn after each cycle =Cn/C0*100%.

In this test, the first cycle corresponds to n=1, the second cycle corresponds to n=2, ..., and the 300-th cycle corresponds to n=300. The corresponding battery capacity retention rate data, that is, the value of P300, in Table 1 are measured after 300 cycles under the preceding test conditions.

### (7) Battery charging rate performance test

At 25°C, the secondary batteries in the examples and comparative examples were constant-current charged at 1/3C to 3.6 V, and then constant-voltage charged to a current of 0.05C and left standing for 5 min. The charge capacities at this time point were recorded, which were the initial charge capacities. The secondary batteries were left standing for 5 min, then constant-current discharged at 1/3C to 2.5 V, and then left standing for 30 min. The secondary batteries were constant-current charged at 5C to 3.6 V, and then constant-voltage charged to a current of 0.05C and left standing for 5 min. The charge capacities were recorded at this time point. Battery capacity retention rate (%) at 5C charge rate=5C charge capacity/1/3C charge capacity×100%.

The results obtained are included in Table 1:

**Table 1. Performance of different positive electrode plates**

| Serial No. | Dissolution time (min) | Slurry viscosity (mPa·s) | Thick blank mechanical strength (MPa) | Diameter of winding mandrel with cracked electrode plate (mm) | Peeling force of electrode plate (N/m) | Capacity retention rate (%) | Capacity retention rate at 5C charge rate |
|---|---|---|---|---|---|---|---|
| Example 1 | 120 | 12738 | 0.12 | 1 | 62 | 92.86% | 47% |
| Example 2 | 80 | 9952 | 0.07 | 2 | 34 | 88.73% | 41.4% |
| Example 3 | 150 | 25065 | 0.10 | 5 | 58 | 90.14% | 42% |
| Example 4 | 240 | 12123 | 0.09 | 2 | 50 | 91.86% | 45.6% |
| Example 5 | 90 | 15846 | 0.09 | 3 | 78 | 90.88% | 44% |
| Example 6 | 60 | 10357 | 0.06 | 2 | 47 | 89.50% | 43% |
| Example 7 | 110 | 13438 | 0.08 | 4 | 50 | 87.37% | 41.7% |
| Example 8 | 70 | 10732 | 0.07 | 2 | 52 | 89.98% | 42.8% |
| Example 9 | 80 | 8351 | 0.04 | 4 | 46 | 85.22% | 37.3% |
| Example 10 | 80 | 13735 | 0.13 | 1 | 68 | 93.20% | 48% |
| Example 11 | 80 | 16837 | 0.16 | / | 82 | 89.72% | 39% |
| Example 12 | 80 | 17446 | 0.22 | / | 88 | 85.47% | 36.6% |
| Example 13 | 80 | 17935 | 0.25 | / | 90 | 82.06% | 34.1% |
| Comparative example | 200 | 7840 | 0.02 | 5 | 10. | 71.40% | 26% |

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification, but includes all technical solutions falling within the scope of the claims.

## Claims

1. A positive electrode material, **characterized by** comprising an active substance and a binder, wherein the binder has the following formula: 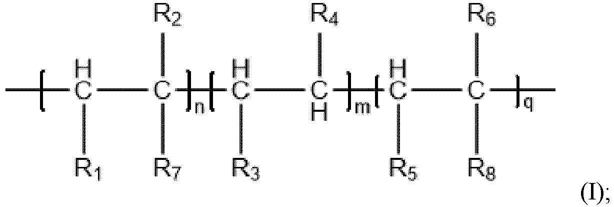 wherein,
R₁, R₃, R₇, and R₈ are each independently selected from H, halogen, substituted or unsubstituted C1-8 alkyl group, substituted or unsubstituted C1-8 alkoxy group, substituted or unsubstituted C1-8 acyloxy group, and substituted or unsubstituted C1-8 acylamino group;
R₂ is selected from -CN, -OH, -COOH and soluble salts thereof, sulfonic acid group and a salt thereof, substituted or unsubstituted C1-8 acyloxy group, substituted or unsubstituted C1-8 acylamino group, and substituted or unsubstituted C5-8 cycloacylamino group;
R₄ is selected from substituted or unsubstituted C5-20 aryl group, substituted or unsubstituted C4-8 saturated or unsaturated cyclic group, and substituted or unsubstituted C5-30 heterocyclic group;
R₅ and R₆ are each independently selected from -H, halogen, hydroxyl group, substituted or unsubstituted C1-8 alkyl group, substituted or unsubstituted C1-8 alkoxy group, and substituted or unsubstituted C1-8 alkene group; and
n=2100-4500, m=2100-5850, and q=350-1800.

2. The positive electrode material according to claim 1, **characterized in that** substituents of groups in the binder are each independently selected from C1-8 alkyl group, halogen, -OH, C3-8 cycloalkyl group, C2-8 heterocycloalkyl group, C1-8 carboxyl group and a salt thereof, and sulfonic acid group and a salt thereof.

3. The positive electrode material according to claim 1 or 2, **characterized in that** a substituent of R₄ in the binder is selected from -OH, C1-4 carboxyl group and a salt thereof, and sulfonic acid group and a salt thereof.

4. The positive electrode material according to claim 1 or 2, **characterized in that** in the binder, R₁, R₃, R₇, and R₈ are each independently selected from H, Cl, substituted or unsubstituted C1-4 alkyl group, substituted or unsubstituted C1-4 alkoxy group, substituted or unsubstituted C1-4 acyloxy group, and substituted or unsubstituted C1-4 acylamino group;
and/or
R₂ is selected from -CN, -OH, -COOH and soluble salts thereof, sulfonic acid group and a salt thereof, substituted or unsubstituted C1-4 acyloxy group, substituted or unsubstituted C1-4 acylamino group, and substituted or unsubstituted C5-8 cycloacylamino group;
and/or
R₄ is selected from substituted or unsubstituted C6-18 aryl group, substituted or unsubstituted C4-8 saturated or unsaturated cyclic group, and substituted or unsubstituted C6-18 heterocyclic group;
and/or
R₅ and R₆ are each independently selected from -H, halogen, hydroxyl group, substituted or unsubstituted C1-4 alkyl group, substituted or unsubstituted C1-4 alkoxy group, and substituted or unsubstituted C1-4 alkene group.

5. The positive electrode material according to claim 1 or 2, **characterized in that** in the binder, R₂ is selected from -CN, -COOH and a soluble salt thereof, acid group and a salt thereof, substituted or unsubstituted C1-8 acyloxy group, and 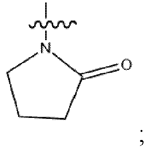 and/or
R₄ is selected from phenyl group, methylphenyl group, benzylidene group, cyclohexenyl group, six-membered cyclic alkane group, six-membered cyclic ketone group, six-membered cyclic alcohol group, and benzenesulfonate group;
and/or
R₅ and R₆ are each independently selected from -H, -Cl, methyl group, vinyl group, and hydroxyl group.

6. The positive electrode material according to claim 1 or 2, **characterized in that** in the binder, R₁, R₃, R₅, R₇, and R₈ are all hydrogen, R₂ is -CN, R₄ is phenyl group, and R₆ is vinyl group.

7. The positive electrode material according to claim 1 or 2, **characterized in that** through calculation based on weight, a percentage of the binder is 0.8-5wt%, preferably 1.0-2.5wt%.

8. The positive electrode material according to claim 1 or 2, **characterized in that** through calculation based on weight, a percentage of the active substance is 85-98.7wt%, preferably 91.5-98.3wt%;
and/or
the positive electrode material further comprises a conductive agent, and a percentage of the conductive agent is 0.5-10wt%, preferably 0.7-6wt%.

9. The positive electrode material according to claim 1 or 2, **characterized in that** the conductive agent comprises at least one of conducting carbon, acetylene black, carbon black, Ketjen black, carbon dots, carbon nanotubes, graphene, and carbon nanofiber.

10. A secondary battery, comprising the positive electrode material according to any one of claims 1 to 9.

11. A battery module, comprising the secondary battery according to claim 10.

12. A battery pack, comprising the battery module according to claim 11.

13. An electric apparatus, comprising at least one of the secondary battery according to claim 10, the battery module according to claim 11, or the battery pack according to claim 12.
